# EUROPEAN PATENT SPECIFICATION

(11) **EP 3 406 956 B1**
(45) Date of publication and mention of the grant of the patent: **16.11.2022**
(21) Application number: 18172917.9
(22) Date of filing: 17.05.2018
(51) Int. Cl.: F16L 59/16, F25B 41/40, F25B 41/42, F16L 41/02, F16L 59/18

(54) **BRANCH PIPE**
ABZWEIGROHR
TUYAU DE DÉRIVATION

(30) Priority: 22.05.2017 JP 2017100549; 30.06.2017 JP 2017128192
(43) Date of publication of application: 28.11.2018
(73) Proprietor: Kakinuma Kinzoku Seiki Co., Ltd., Tokyo (JP)
(72) Inventor: Kakinuma, Osamu, Tokyo, Tokyo (JP)
(74) Representative: SSM Sandmair

(56) References cited:
- GB-A- 451 460
- JP-U- H0 288 094

## Description

### CROSS-REFERING TO RELATED APPLICATION

The present application claims priorities of Japanese Patent Applications No. 2017-100549 filed on May 22, 2017 and of Japanese Patent Application No. 2017-128129 filed on June 30, 2017.

### BACKGROUND OF THE INVENTION

### Technical Field

The present invention relates to a branch pipe and a branch pipe for a multi-type air conditioner, and in particular, to a branch pipe and a branch pipe for multi-type air conditioner having good usability.

### Related Art

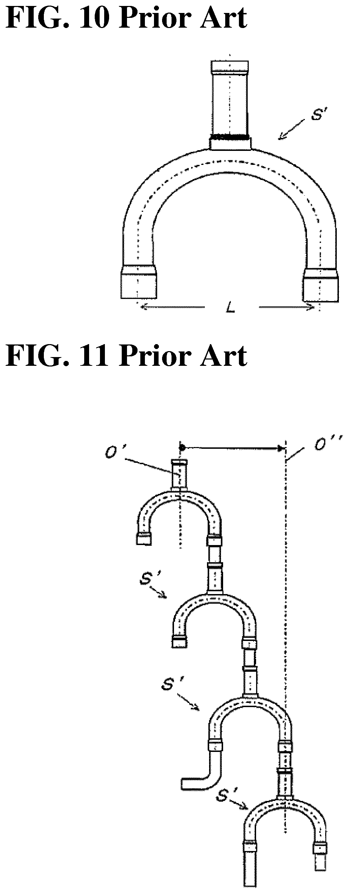

Conventionally, in a multi-type air conditioner, a branch pipe S' shown in FIG. 10 is used to branch a refrigerant.

In FIG. 11, for example, an indoor unit of a multi-type air conditioner is installed on each floor, and four branch pipes S' are connected in series.
From the document GB-A-451 460 is known a branch pipe for use in joining together or separating two or more fluid streams.

The fluid streams to be joined flow side by side in substantially parallel relationship and in the same direction immediately prior to their junction. The angle at which the two streams meet is accordingly extremely small and two inlet conduits are curved.

Using the known branch pipe for separating a single fluid stream into two or more streams, the fluid flow becomes uneven at the junction. Due to the geometry of the pipe connection the stream tend to pulsate and cause noise.

From the document JP H02 88094 U is known a dead-end pipe from which another pipe branches off to repair broken water pipes.

### SUMMARY OF THE INVENTION

Therefore, when the above mentioned branch pipe S' is used, the axis offset O'O", which is (L/2) × 3, occurs.

This axis offset O'O" means that the positions of piping are different when the piping passes through the floor and the ceiling of each floor, which makes it difficult to install the piping. Thus, there is the problem that the above mentioned branch pipe does not have good usability.

It is an object of the present invention to provide a branch pipe and a branch pipe for a multi-type air conditioner which are made in consideration of the above problems.
The above problems are solved by the subject matter of claim 1. In the subclaims, further advantageous embodiments of the subject matter of claim 1 are disclosed.

According to a claim 2 of the invention the first outflow portion of the branch pipe is formed of two members. That is, the first outflow portion of the branch pipe comprises a pipe. The pipe comprises the middle portion and the outlet section of the first outflow portion. the outlet of the pipe is the outlet of the outlet section.. The inlet of the inflow portion and the outlet of the pipe communicate with each other. The inlet of the inflow portion and an outlet of the second outflow portion communicate with each other. A middle portion of the pipe is the middle portion of the first outflow portion. The middle portion of the pipe is bent so that the axis of the branch pipe at the outlet of the pipe is aligned with the axis of the branch pipe at the inflow portion.

According to claim 5 a linear first and a second connection pipe are provided. The second connection pipe is designed to be connected to the second outflow portion. The second connection pipe is not connected to the second outflow portion prior to an installation work. If the first outflow portion of the branch pipe is formed of two members comprising a pipe, the linear first connection pipe is connected to the pipe and the second connection pipe is not connected to the second outflow portion prior to an installation work.

According to claim 1, the middle portion of the first outflow portion is curved so that the axis of the first outlet section is aligned with the axis of the branch pipe at the inflow portion. That is, since the branch pipe at the inflow portion and the branch pipe at the outlet of the first outflow portion can be positioned in the same axis, for example, when installing multi-type air conditioners in rooms in a multi-floor building or side by side rooms, with respect to the branch pipe according to claim 1, the position of the piping (the position of the piping hole of the ceiling, the position of the piping hole of the wall) forms a linear line, and it is possible to provide a convenient branch pipe which can facilitate the installation work of the multi-type air conditioner.

Further, according to claim 2, the first outlet portion is formed of two members comprising a pipe. A middle portion of the pipe is bent so that the longitudinal axis of the branch pipe at the outlet of the pipe is aligned with the longitudinal axis at the inflow portion. That is, since the branch pipe at the inflow portion and the branch pipe at the outlet of the pipe can be positioned in the same axis, for example, when installing multi-type air conditioners in rooms in a multi-floor building or side by side rooms, with respect to the branch pipe according to the second aspect, the position of the piping (the position of the piping hole of the ceiling, the position of the piping hole of the wall) forms a linear line, and it is possible to provide a convenient branch pipe which can facilitate the installation work of the multi-type air conditioner.

According to the third claim, in addition to the effects of claim 1 and claim 2, the inner wall of the inflow portion and the outer wall of the inflow portion, the inner wall of the first outflow portion and the outer wall of the first outflow portion, and the inner wall of the second outflow portion and the outer wall of the second outflow portion are continuously connected with each other with the same material, and the inner wall of the first outflow portion and the inner wall of the second outflow portion are connected with each other in an round shape. Thus, it is possible to provide a branch pipe with good usability with less pressure loss.

According to claim 4 and 6, in addition to the effects of claim 1 and claim 2, the branch pipe includes a connection pipe connected to the second outflow portion. An angle formed by an extension line of the axis the inflow portion and the axis the second outflow portion is 45 degrees. A middle portion of the connection pipe is bent. The bent connection pipe includes one part of the connection pipe and the other part of the connection pipe. The one part of the connection pipe is close to the second outflow portion and the other part of the connection pipe is away from the second outflow portion. An angle formed by an extension line of a longitudinal axis of the one part of the connection pipe and a longitudinal axis of the other part of the connection pipe is 45 degrees. As a result, when the connection pipe is not used for outward branching, the connection pipe can be rotated so that an angle formed by the axis of the branch pipe at the outlet of the connection pipe (the other portion of the second connection pipe) and the axis of the inflow portion is made parallel, and when using the connection pipe for outward branching, the connection pipe can be rotated so that an angle formed by the axis of the branch pipe at the outlet of the connection pipe (the other portion of the connection pipe) and the axis of the inflow portion is made to be 90 degrees.
Thus, it is possible to provide a branch pipe with good usability.

According to claim 5, a linear first connection pipe is connected to the first outflow portion and a second connection pipe is not connected to the second outflow portion prior to an installation work. An axis of the linear first connection pipe is aligned with the axis of the inflow portion. As a result, regardless of whether the second connection pipe is branched from the second outflow portion, the position of the linear first connection pipe connected to the first outflow portion is determined, so that it is possible to shorten the time for connecting the linear first connection pipe to the first outflow portion at the time of installation work. When installing multi-type air conditioners in rooms in a multi-floor building or side by side rooms, the piping position (the position of the piping hole of the ceiling, the position of the piping hole of the wall) forms a linear line, and it is possible to provide a convenient branch pipe which can facilitate the installation work of the multi-type air conditioner.

Further, if the first outlet portion of the branch pipe is formed of two members a linear first connection pipe according to claim 5 is connected to the pipe and a second connection pipe is not connected to the second outflow portion prior to an installation work. An axis of the linear first connection pipe is aligned with an axis the inflow portion. As a result, regardless of whether the second connection pipe is branched from the second outflow portion, the position of the linear first connection pipe connected to the pipe is determined, so that it is possible to shorten the time for connecting the linear first connection pipe to the first connection branch pipe at the time of installation work. When installing multi-type air conditioners in rooms in a multi-floor building or side by side rooms, the piping position (the position of the piping hole of the ceiling, the position of the piping hole of the wall) forms a linear line, and it is possible to provide a convenient branch pipe which can facilitate the installation work of the multi-type air conditioner.

### BRIEF DESCRIPTION OF DRAWINGS

FIG. 1 is a schematic view showing a branch pipe according to a first embodiment of the present invention;
FIG. 2 is a schematic view of one mode of use of the branch pipe of FIG. 1;
FIG. 3 is a schematic view of another form according to a second embodiment of the present invention different from the branch pipe of FIG. 1;
FIG. 4 is a schematic view of another form according to a further embodiment of the present invention different from the use form of the branch pipe of FIG. 2, and shows a state before construction;
FIG. 5 is a schematic view showing a state after the construction of FIG. 4;
FIG. 6 is a schematic view of the use form of the branch pipe of FIG. 3, and shows a state before construction;
FIG. 7 is a schematic view showing a state after the construction of FIG. 6;
FIG. 8 is a schematic view of a state in which a branch pipe is covered with a coated insulation material;
FIG. 9 is a schematic view showing a state before the exposed portion of FIG. 8 is covered with the coated insulation material;
FIG. 10 is a schematic view of a conventional branch pipe; and
FIG. 11 is a schematic view of one mode of use of the branch pipe of FIG. 10.

### DETAILED DESCRIPTION OF THE INVENTION

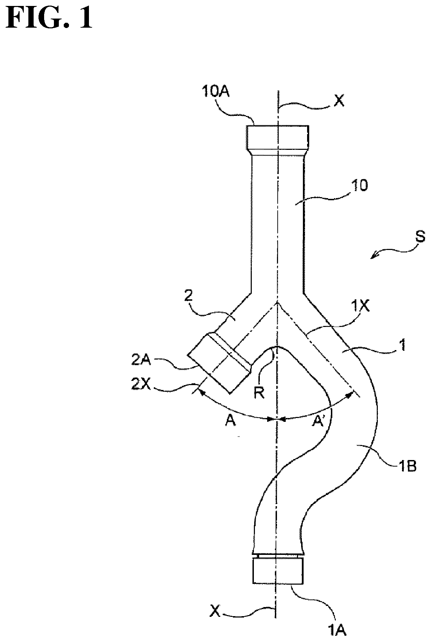

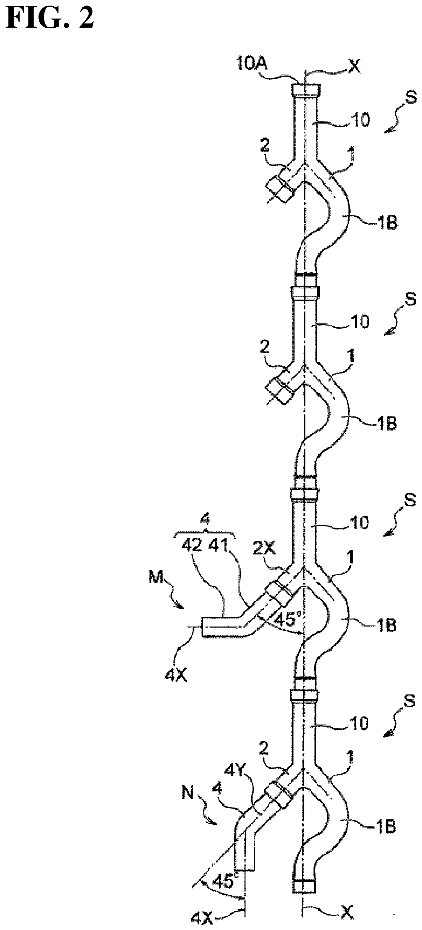

A branch pipe and a branch pipe for a multi-type air conditioner according to an embodiment of the present invention will be described with reference to the drawings (FIGS. 1 and 2).

FIG. 1 is a schematic view of a branch pipe (branch pipe for multi-type air conditioner) S of the present invention. The branch pipe S branches fluid from an inflow portion 10 into a first outflow portion 1 and a second outflow portion 2. The inflow portion 10 has an inlet and an axis X. The first outflow portion 1 comprises an inlet section having an axis 1X, a middle portion 1B and an outlet section with an outlet having an axis X. The inlet of the inflow portion 10 communicates with the outlet of the first outflow portion 1, and the inlet of the inflow portion 10 and the outlet of the second outflow portion 2 communicate with each other. The branch pipe S is, for example, incorporated in a refrigeration cycle of a multi-type air conditioner, and is used for diverting the refrigerant.

The middle portion of the first outflow portion 1 is curved so that the axis X of the outlet section 1A of the first outflow portion 1 is aligned with the axis X of the inflow portion 10. 1B shown in FIG. 1 is a curved portion.

Since the pipe portion 10A at the inflow portion 10 and the pipe portion 1A at the outlet of the first outflow portion 1 can be positioned in the same axis X in this way, for example, when installing multi-type air conditioners in rooms in a multi-floor building or side by side rooms, with respect to branch pipe S, the piping position (the position of the piping hole of the ceiling, the position of the piping hole of the wall) forms a linear line as shown in FIG. 2, and it is possible to provide a convenient branch pipe S which can facilitate the installation work of the multi-type air conditioner.

Although in FIG. 2, the branch pipes S are sequentially juxtaposed to make the explanation easy to understand, and a linear piping is appropriately positioned between the adjacent branch pipes S.

Although not shown, the branch pipe S shown in FIG. 1 can be formed by compressing the both ends of the copper pipe in the axial direction while filling the copper pipe set in the mold with the liquid of ultra-high pressure, and processing it into a shape engraved in the mold, so-called bulging process.

The angle A formed by the extension line of the axis X of the pipe portion 10A at the inflow portion 10 and the axis 2X of a pipe 2A at the outlet of the second outflow portion 2 is an acute angle, for example 45 degrees. An angle A' formed by an extension line of the axis X of of the inflow portion 10 and the axis 1X of the inlet section of the first outflow portion 1 is an acute angle of 45 degrees. According to the invention A = A'.

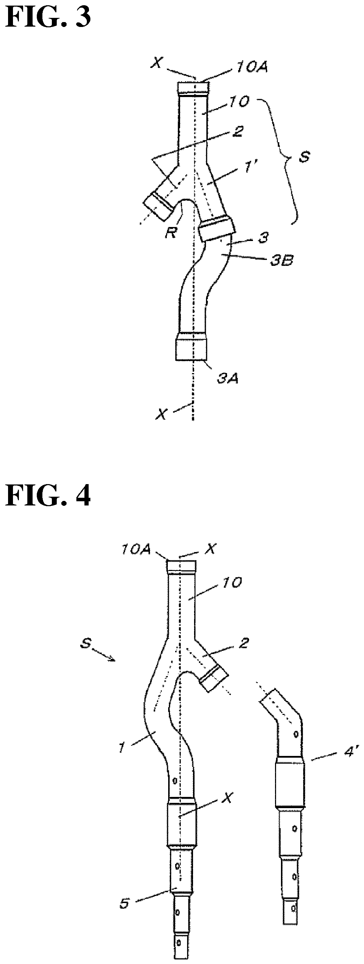

Although the branch pipe S shown in FIG. 1 is integrally formed, the present invention is not limited to this configuration. For example, as shown in FIG. 3, the first outflow portion 1 of the branch pipe S may be formed of two members according to a second embodiment of the invention.

That is, a pipe 3 is connected to the first outflow portion 1' which is shorter than the first outflow portion 1 shown in FIG. 1. The middle portion of pipe 3 is curved so that the axis X of a pipe portion 3A at the outlet of the pipe 3 is aligned with the axis X of the inflow portion 10. Reference numeral 3B shown in FIG. 3 is a curved portion.

For the branch pipe S shown in FIG. 3, the inlet of the inflow portion 10 communicates with the outlet of the pipe 3, and the inlet of the inflow portion 10 and the outlet of the second outflow portion 2 communicate with each other.

For the branch pipe S shown in FIG. 3 (which is not accurately represented with regard to axis 1X), as in the branch pipe S shown in FIG. 1, since the pipe portion 10A at the inflow portion 10 and the pipe portion 3A at the outlet of the pipe 3 can be positioned in the same axis X, for example, when installing multi-type air conditioners in rooms in a multi-floor building or side by side rooms, with respect to branch pipe S, the piping position (the position of the piping hole of the ceiling, the position of the piping hole of the wall) forms a linear line as shown in FIG. 2, and it is possible to provide a convenient branch pipe S which can facilitate the installation work of the multi-type air conditioner.

Further, in the branch pipe S shown in FIGS. 1 and 3, the inner wall of the inflow portion 10 and the outer wall of the inflow portion 10, the inner wall of the first outflow portion 1 and the outer wall of the first outflow portion 1, and the inner wall of the second outflow portion 2 and the outer wall of the second outflow portion 2 are continuously connected with each other with the same material (for example, copper), and the inner wall of the first outflow portion 1 and the second outflow portion 2 are connected in a round shape. In the branch pipe S shown in FIGS. 1 and 3, the inner wall of the first outflow portion 1 and the inner wall of the second outflow portion 2 are not shown. A round shaped portion connecting the inner wall of the first outflow portion 1 and the inner wall of the second outflow portion 2 are formed along the R-shaped portion R (FIGS. 1 and 3) of the outer wall of the first outflow portion 1 and the outer wall of the second outflow portion 2.

As shown in FIG. 2, when a connection pipe 4 is not used for outward branching (refer to N in FIG. 2), the connection pipe 4 is rotated and an angle formed by the axis 4X of the branch pipe at the outlet of the connection pipe 4 (the longitudinal axis 4X of one part of the bent second connection pipe 4) and the axis X of the inflow portion 10 is made parallel. When the connection pipe 4 is used for outward branching (refer to M in FIG. 2), the connection pipe 4 is rotated and an angle formed by the axis 4X of the branch pipe at the outlet of the connection pipe 4 (the longitudinal axis 4Y of the other part of the bent connection pipe 4) and the axis X of the branch pipe at the inflow portion 10 is made to be 90 degrees. As a result, it is possible to provide a branch pipe S with good usability.

For this purpose, the angle formed by the extension line of the axis X of the pipe portion 10A at the inflow portion 10 and the axis 2X of the pipe portion 2A at the outlet of the second outflow portion 2 is 45 degrees (see M in FIG. 2), the middle portion of the connection pipe 4 connected to the second outflow portion 2 is bent, the bent connection pipe 4 includes one part of the connection pipe 41 and the other part of the connection pipe 42, the one part of the connection pipe 41 is close to the second outflow portion 4 and the other part of the connection pipe 42 is away from the second outflow portion 4, and an angle formed by the extension line of a longitudinal axis of the one part of the connection pipe 41 and a longitudinal axis of the other part of the second connection pipe 42 is 45 degrees (see N in FIG. 2).

As shown in FIG. 4, (which is not accurately represented with regard to axis 1X), prior to the installation work, a linear first connection pipe 5 is connected to the first outflow portion 1, and a second connection pipe 4' is not connected to the second outflow portion 2, and the axis X of the linear first connection pipe 5 is made to be aligned with the axis X of the pipe portion 10A at the inflow portion 10.

Since the axis X of the linear first connection pipe 5 is aligned with the axis X of the inflow portion 10, regardless of whether the second' connection pipe 4' is branched from the second outflow portion 2, the position of the linear first connection pipe 5 connected to the first outflow portion 1 is determined, as shown in FIG. 4. As a result, it is possible to shorten the time for connecting the linear first connection pipe 5 to the first outflow portion 1 at the time of installation work, and to provide the branch pipe S with good usability.

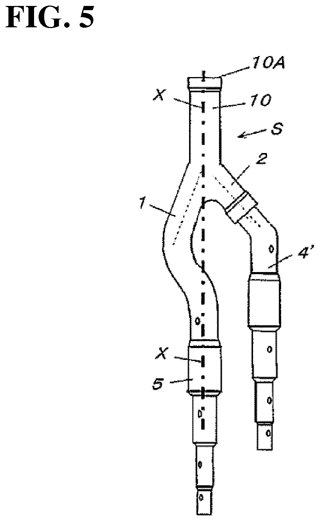

When it is not necessary to branch the second connection pipe 4' from the second outflow portion 2, the second connection pipe 4' is connected to the second outflow portion 2 when the installation work is carried out, as shown in FIG. 5.

This can be applied similarly to the branch pipe S shown in FIG. 3.

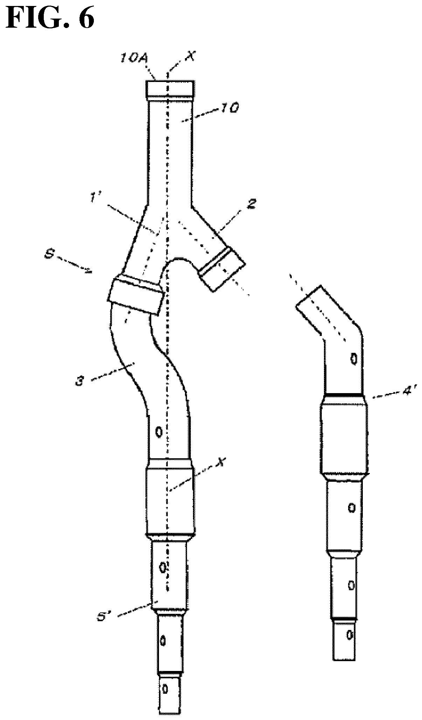

That is, as shown in FIG. 6, (which is not accurately represented with regard to axis 1X), prior to the installation work, a linear first connection pipe 5' is connected to the pipe 3, the second' connection pipe 4' is not connected to the second outflow portion 2, and the axis X of the linear first connection pipe 5' is made to be aligned with the axis X of the inflow portion 10.

Since the axis X of a linear first connection pipe 5' is aligned with the axis X of the pipe 10A at the inflow portion 10, regardless of whether the second connection pipe 4' is branched from the second outflow portion 2, the position of the linear first connection pipe 5' connected to the pipe 3 is determined, as shown in FIG. 6. As a result, it is possible to shorten the time for connecting the linear first connection pipe 5' to the pipe 3 at the time of installation work, and to provide the branch pipe S with good usability.

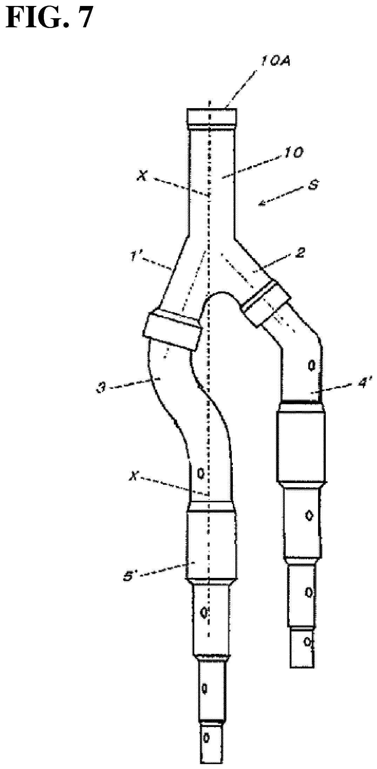

When it is not necessary to branch the second connection pipe 4' from the second outflow portion 2, the second connection pipe 4' is connected to the second outflow portion 2 when the installation work is carried out, as shown in FIG. 7.

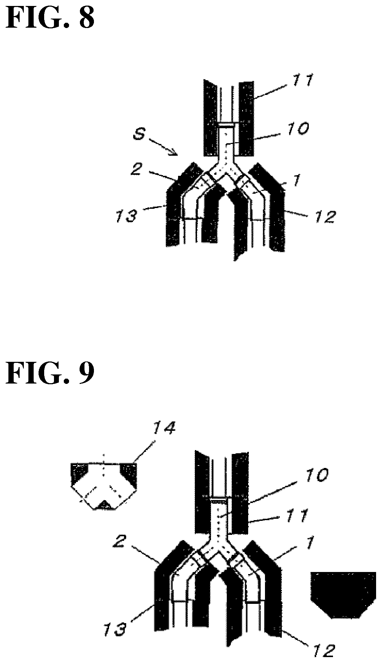

In addition, reference numeral 11 shown in FIG. 8 is an inflow portion insulation material covering the inflow portion 10, reference numeral 12 is a first outflow portion insulation material covering the first outflow portion 1, and reference numeral 13 is a second outflow portion insulation material covering the second outflow portion 2. Since the branch pipe S is covered with an inflow portion insulation material 11, an outflow portion insulation material 12, and a second outflow portion insulation material 13, heat loss of the branch pipe S can be prevented.

Numeral 14 shown in FIG. 9 is a bifurcated portion insulation material covering a portion of the branch portion S where the portion of the branch portion S is not covered with the inflow portion insulation material 11, the first outflow portion insulation material 12, and the second outflow portion insulation material 13.

Since the branch pipe S is covered with the inflow portion insulation material 11, the outflow portion insulation material 12, the second outflow portion insulation material 13, and a bifurcated portion insulation material 14, heat loss of the branch pipe S can be further prevented.

### Reference Signs List

- S: Branch pipe
- 1: First outflow portion
- 2: Second outflow portion
- 1A: Branch pipe portion at the outlet of the first outflow portion
- 10A: Branch pipe portion at the inflow portion
- X: Axis of the branch pipe at the outlet of the first outflow portion
- X: Axis of the branch pipe at the inflow portion

## Claims

1. A branch pipe (S) comprising:
an inflow portion (10), a first outflow portion (1; 1',3) and a second outflow portion (2), for branching fluid from the inflow portion (10) into the first outflow portion (1; 1',3) and the second outflow portion (2),
wherein the inflow portion (10) has an inlet and an axis (X), the first outflow portion (1; 1',3) comprises an inlet section having an axis (1X), a middle portion (1B, 3B) and an outlet section with an outlet having an axis (X) the middle portion of the first outflow portion (1; 1',3) being bent so that the axis (X) of the first outlet section is aligned with the axis of the inflow portion (10),
the second outflow portion (2) has an outlet and an axis (2X)
the inlet of the inflow portion (10) and the outlet of the first outflow portion (1; 1', 3) communicate with each other,
the inlet of the inflow portion (10) and the outlet of the second outflow portion (2) communicate with each other, and wherein
an angle (A') formed between the axis (X) of the inflow portion (10) and the axis (1X) of the inlet section of the first outflow portion (1; 1',3) is 45 degrees,
**characterized in that**
an angle (A) formed between the axis (X) of the inflow portion (10) and the axis (2X) of the second outflow portion (2) is 45 degrees.

2. A branch pipe (S) according to claim 1, wherein the first outflow portion (1',3) is formed of two members.

3. A branch pipe (S) according to claim 1,
wherein an inner wall of the inflow portion (10), an outer wall of the inflow portion (10), an inner wall of the first outflow portion (1; 1',3), an outer wall of the first outflow portion (1; 1',3), an inner wall of the second outflow portion (2), an outer wall of the second outflow portion (2) are continuously connected with each other with a same material, and
the inner wall of the first outflow portion (1; 1',3) and the inner wall of the second outflow portion (2) are connected with each other in a round shape.

4. A branch pipe (S) according to any of the preceding claims, further comprising a connection pipe (4) connected to the second outflow portion (2),
a middle portion of the connection pipe (4) is bent, and the bent connection pipe (4) includes one part of the connection pipe (41) and another part of the connection pipe (42),
the one part of the connection pipe (41) is close to the second outflow portion (2) and the another part of the connection pipe (42) is away from the second outflow portion (2), and
an angle formed by an extension line of a longitudinal axis of the one part of the connection pipe (41) and a longitudinal axis of the another part of the connection pipe (42) is 45 degrees.

5. A branch pipe (S) according to claims 1 to 3, further comprising:
a linear first and a second connection pipe (5, 4'; 5',4'),
the linear first connection pipe (5; 5') is connected to the first outflow portion (1; 1',3) and the second connection pipe (4') is designed to be connected to the second outflow portion (2), and
an axis of the linear first connection pipe (5; 5') is aligned with the axis at the inflow portion (10).

6. A branch pipe according to claim 4,
wherein when the connection pipe (4) is not used for outward branching, the connection (4) pipe is rotated so that an angle formed by an axis of the branch pipe at the outlet of the connection pipe (4X) and the axis of the branch pipe at the inflow portion (X) is made parallel,
or when using the connection pipe (4) for outward branching, the connection pipe (4) is rotated so that an angle formed by the axis of the branch pipe at the outlet of the connection pipe (4Y) and the axis of the branch pipe at the inflow portion (X) is made to be 90 degrees.

## Patentansprüche

1. Abzweigrohr (S) mit einem Zuflussabschnitt (10), einem ersten Abflussabschnitt (1; 1', 3) und einem zweiten Abflussabschnitt (2) zum Abzweigen von Fluid aus dem Zuflussabschnitt (10) in den ersten Abflussabschnitt (1; 1', 3) und den zweiten Abflussabschnitt (2),
wobei der Zuflussabschnitt (10) einen Einlass und eine Achse (X) aufweist, wobei der erste Abflussabschnitt (1; 1', 3) einen Einlassabschnitt mit einer Achse (1X), einen Mittelabschnitt (1B, 3B) und einen Auslassabschnitt mit einem eine Achse (X) aufweisenden Auslass umfasst, wobei der Mittelabschnitt (1B, 3B) des ersten Abflussabschnitts (1; 1', 3) so gebogen ist, dass die Achse (X) des Auslassabschnitts zu der Achse (X) des Zuflussabschnitts (10) ausgerichtet ist,
wobei der zweite Abflussabschnitt (2) einen Auslass und eine Achse (2X) aufweist,
wobei der Einlass des Zuflussabschnitts (10) und der Auslass des ersten Abflussabschnitts (1; 1', 3) miteinander in Verbindung stehen,
wobei der Einlass des Zuflussabschnitts (10) und der Auslass des zweiten Abflussabschnitts (2) miteinander in Verbindung stehen, und
wobei ein von der Achse (X) des Zuflussabschnitts (10) und von der Achse (1X) des Einlassabschnitts des ersten Abflussabschnitts (1; 1', 3) eingeschlossener Winkel (A') 45 Grad beträgt,
**dadurch gekennzeichnet, dass**
ein von der Achse (X) des Zuflussabschnitts (10) und von der Achse (2X) des zweiten Abflussabschnitts (2) eingeschlossener Winkel (A) 45 Grad beträgt.

2. Abzweigrohr (S) nach Anspruch 1, wobei der erste Abflussabschnitt (1', 3) aus zwei Elementen gebildet ist.

3. Abzweigrohr (S) nach Anspruch 1,
wobei eine Innenwand des Zuflussabschnitts (10), eine Außenwand des Zuflussabschnitts (10), eine Innenwand des ersten Abflussabschnitts (1; 1', 3), eine Außenwand des ersten Abflussabschnitts (1 ; 1', 3), eine Innenwand des zweiten Abflussabschnitts (2) und eine Außenwand des zweiten Abflussabschnitts (2) durchgehend mit einem gleichen Material miteinander verbunden sind, und
wobei die Innenwand des ersten Abflussabschnitts (1; 1', 3) und die Innenwand des zweiten Abflussabschnitts (2) in gerundeter Form miteinander verbunden sind.

4. Abzweigrohr (S) nach einem der vorhergehenden Ansprüche, das ferner ein Verbindungsrohr (4) umfasst, das mit dem zweiten Abflussabschnitt (2) verbunden ist,
wobei ein Mittelabschnitt des Verbindungsrohrs (4) gebogen ist und das gebogene Verbindungsrohr (4) einen Teil (41) des Verbindungsrohrs (4) und einen anderen Teil (42) des Verbindungsrohrs (4) umfasst,
wobei der eine Teil (41) des Verbindungsrohrs (4) nahe dem zweiten Abflussabschnitt (2) liegt und der andere Teil (42) des Verbindungsrohrs (4) von dem zweiten Abflussabschnitt (2) entfernt liegt, und
wobei ein von einer Verlängerungslinie einer Längsachse des einen Teils (41) des Verbindungsrohrs (4) und von einer Längsachse des anderen Teils (42) des Verbindungsrohrs (4) eingeschlossener Winkel 45 Grad beträgt.

5. Abzweigrohr (S) nach einem der Ansprüche 1 bis 3, das ferner ein lineares erstes und zweites Verbindungsrohr (5, 4'; 5', 4') umfasst,
wobei das lineare erste Verbindungsrohr (5; 5') mit dem ersten Abflussabschnitt (1; 1', 3) verbunden ist und das zweite Verbindungsrohr (4') dazu ausgelegt ist, mit dem zweiten Abflussabschnitt (2) verbunden zu werden, und
wobei eine Achse (X) des linearen ersten Verbindungsrohrs (5; 5') zu der Achse (X) am Zuflussabschnitt (10) ausgerichtet ist.

6. Abzweigrohr (S) nach Anspruch 4,
wobei das Verbindungsrohr (4), wenn es nicht dazu verwendet wird, nach außen abzuzweigen, so gedreht wird, dass ein von einer Achse (4X) des Abzweigrohrs am Auslass des Verbindungsrohrs (4) und von der Achse (X) des Abzweigrohres am Zuflussabschnitt (10) eingeschlossener Winkel parallel wird, oder
wobei das Verbindungsrohr (4), wenn es dazu verwendet wird, nach außen abzuzweigen, so gedreht wird, dass ein von der Achse (4Y) des Abzweigrohrs am Auslass des Verbindungsrohrs (4) und von der Achse (X) des Abzweigrohres am Zuflussabschnitt (10) eingeschlossener Winkel 90 Grad beträgt.

## Revendications

1. Tuyau de bifurcation (S) comprenant une partie d'amenée (10), une première partie d'écoulement (1 ; 1', 3) et une seconde partie d'écoulement (2) pour bifurquer du fluide depuis la partie d'amenée (10) vers la première partie d'écoulement (1 ; 1', 3) et vers la seconde partie d'écoulement (2),
la partie d'amenée (10) comportant une entrée et un axe (X), la première partie d'écoulement (1 ; 1', 3) comprenant une section d'entrée avec un axe (1X), une partie médiane (1B, 3B) et une section de sortie comportant une sortie avec un axe (X), la partie médiane (1B, 3B) de la première partie d'écoulement (1 ; 1', 3) étant coubée de sorte que l'axe (X) de la section de sortie est aligné sur l'axe (X) de la partie d'amenée (10),
la seconde partie d'écoulement (2) comportant une sortie et un axe (2X),
l'entrée de la partie d'amenée (10) et la sortie de la première partie d'écoulement (1 ; 1', 3) étant en communication l'une avec l'autre,
l'entrée de la partie d'amenée (10) et la sortie de la seconde partie d'écoulement (2) étant en communication l'une avec l'autre, et
un angle (A') formé entre l'axe (X) de la partie d'amenée (10) et l'axe (1X) de la section d'entrée de la première partie d'écoulement (1 ; 1', 3) étant de 45 degrés,
**caractérisé en ce que**
un angle (A) formé entre l'axe (X) de la partie d'amenée (10) et l'axe (2X) de la seconde partie d'écoulement (2) est de 45 degrés.

2. Tuyau de bifurcation (S) selon la revendication 1, dans lequel la première partie d'écoulement (1', 3) est formée de deux éléments.

3. Tuyau de bifurcation (S) selon la revendication 1,
une paroi interne de la partie d'amenée (10), une paroi externe de la partie d'amenée (10), une paroi interne de la première partie d'écoulement (1 ; 1', 3), une paroi externe de la première partie d'écoulement (1 ; 1', 3), une paroi interne de la seconde partie d'écoulement (2) et une paroi externe de la seconde partie d'écoulement (2) étant reliées en continu l'une à l'autre avec un même matériau, et
la paroi interne de la première partie d'écoulement (1 ; 1', 3) et la paroi interne de la seconde partie d'écoulement (2) étant reliées l'une à l'autre sous une forme ronde.

4. Tuyau de bifurcation (S) selon l'une quelconque des revendications précédentes, comprenant en outre un tuyau de raccordement (4) relié à la seconde partie d'écoulement (2),
une partie médiane du tuyau de raccordement (4) étant courbée, le tuyau de raccordement courbé (4) comprenant une pièce (41) du tuyau de raccordement (4) et une autre pièce (42) du tuyau de raccordement (4),
la première pièce (41) du tuyau de raccordement (4) étant proche de la seconde partie d'écoulement (2), l'autre pièce (42) du tuyau de raccordement (4) étant éloignée de la seconde partie d'écoulement (2), et
un angle formé par une ligne d'extension d'un axe longitudinal de ladite une pièce (41) du tuyau de raccordement (4) et un axe longitudinal de ladite autre pièce (42) du tuyau de raccordement (4) est de 45 degrés.

5. Tuyau de bifurcation (S) selon l'une quelconque des revendications 1 à 3, comprenant en outre un premier et un second tuyau de raccordement linéaires (5, 4' ; 5', 4'),
le premier tuyau de raccordement linéaire (5 ; 5') étant relié à la première partie d'écoulement (1 ; 1', 3), le second tuyau de raccordement (4') étant conçu pour être relié à la seconde partie d'écoulement (2), et
un axe (X) du premier tuyau de raccordement linéaire (5 ; 5') étant aligné sur l'axe (X) au niveau de la partie d'amenée (10).

6. Tuyau de bifurcation (S) selon la revendication 4, dans lequel
lorsque le tuyau de raccordement (4) n'est pas utilisé pour la bifurcation vers l'extérieur, le tuyau de raccordement (4) est tourné de sorte qu'un angle formé par un axe (4X) du tuyau de bifurcation au niveau de la sortie du tuyau de raccordement (4) et l'axe (X) du tuyau de bifurcation au niveau de la partie d'amenée (10) est parallèle, ou
lorsque le tuyau de raccordement (4) est utilisé pour la bifurcation vers l'extérieur, le tuyau de raccordement (4) est tourné de sorte qu'un angle formé par l'axe (4Y) du tuyau de bifurcation au niveau de la sortie du tuyau de raccordement (4) et l'axe (X) du tuyau de bifurcation au niveau de la partie d'amenée (10) est de 90 degrés.
